(19) Europäisches Patentamt
European Patent Office
Office européen des brevets

(11) EP 3 787 332 A1

(12) EUROPEAN PATENT APPLICATION
published in accordance with Art. 153(4) EPC

(43) Date of publication:
03.03.2021 Bulletin 2021/09

(51) Int Cl.:
H04W 24/10 (2009.01)

(21) Application number: 18917875.9

(22) Date of filing: 11.05.2018

(86) International application number:
PCT/CN2018/086622

(87) International publication number:
WO 2019/213979 (14.11.2019 Gazette 2019/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• ZHAO, Yue
Shenzhen, Guangdong 518129 (CN)
• YU, Zheng
Shenzhen, Guangdong 518129 (CN)

(74) Representative: MERH-IP Matias Erny Reichl
Hoffmann
Patentanwälte PartG mbB
Paul-Heyse-Strasse 29
80336 München (DE)

(54) DATA TRANSMISSION METHOD AND DEVICE

(57) This application provides a data transmission method and apparatus. The method includes: receiving first configuration information, where the first configuration information is used to indicate a first transport block size TBS; determining a preset TBS set based on the first TBS, where the preset TBS set includes one or more TBSs, and the first TBS is a largest TBS in the TBS set; determining, in the preset TBS set, a second TBS for transmitting first data; and sending the first data based on the second TBS. A terminal device can select a proper TBS based on a data volume, and therefore, a data transmission delay is reduced.

FIG. 6

## Description

### TECHNICAL FIELD

This application relates to the communications field, and more specifically, to a data transmission method and apparatus.

### BACKGROUND

A subject of even further enhanced machine-type communication (Even further enhanced Machine-Type Communication, eFeMTC) requires a reduction in a data transmission delay, and the reduction in the transmission delay may be implemented through early data transmission (early data transmission, EDT).

In an EDT process, a network device may configure a transport block size (Transport block size, TBS) for a terminal device by using a system message. Usually, the TBS is a maximum TBS that can be configured by the network device for the terminal device, and the terminal device transmits data based on the maximum TBS, so that a data transmission delay between the terminal device and the network device is relatively high.

### SUMMARY

This application provides a data transmission method and apparatus, to reduce a transmission delay between a network device and a terminal device.

According to a first aspect, a data transmission method is provided. The method includes:

receiving first configuration information, where the first configuration information is used to indicate a first transport block size TBS;

determining a preset TBS set based on the first TBS, where the preset TBS set includes one or more TBSs, and the first TBS is a largest TBS in the TBS set;

determining, in the preset TBS set, a second TBS for transmitting first data; and

sending the first data based on the second TBS.

A terminal device may determine the preset TBS set based on the first TBS configured by a network device, determine, in the preset TBS set, the second TBS for transmitting the first data, and send the first data based on the second TBS. In other words, the terminal device can select a proper TBS based on a data volume, and therefore, a data transmission delay is reduced.

In some possible implementations, the method further includes:

receiving first control information, where the first control information includes information about a first quantity of repetitions, and the information about the first quantity of repetitions indicates the first quantity of repetitions;

determining a first parameter based on the first TBS and/or the second TBS;

determining a second quantity of repetitions based on the first quantity of repetitions and the first parameter; and

sending the first data based on the second quantity of repetitions.

The terminal device determines the first parameter based on the first TBS configured by the network device and the second TBS determined by the terminal based on the data volume of the first data, and may determine the proper second quantity of repetitions based on the first parameter and the first quantity of repetitions configured by the network device. Further, the terminal device may send the first data based on the second quantity of repetitions. In other words, the terminal device sends the first data based on the second quantity of repetitions and the second TBS. Therefore, communication quality is improved and the data transmission delay is reduced.

In some possible implementations, values of the first parameter are 1/2 and 1; or

values of the first parameter are 1/4, 1/2, and 1; or

values of the first parameter are 1/8, 1/4, 1/2, and 1.

In some possible implementations, the preset TBS set is {T1, T2, T3, T4}, T4 is the first TBS, and T1<T2<T3<T4; and

when T4 is greater than or equal to M, and the second TBS is equal to T4 or T3, the first parameter is equal to 1, where M is a positive integer specified in advance; and/or

when T4 is greater than or equal to M, and the second TBS is equal to T2 or T1, the first parameter is equal to 1/2; and/or

when T4 is less than M, the first parameter is equal to 1.

The network device and the terminal device may design the first parameter based on the second TBS and the first TBS, so that the terminal device can send the first data to the network device based on a proper TBS and/or a proper quantity of repetitions. In this way, the communication quality is further improved and the data transmission delay is further reduced.

In some possible implementations, M is equal to 600.

In some possible implementations, if the terminal device is at a coverage enhancement level 0, at a coverage enhancement level 1, or in a coverage enhancement mode A, and the first TBS is less than or equal to N1, the first parameter is equal to 1, where N1 is a positive integer specified in advance; or

if the terminal device is at a coverage enhancement level 2, at a coverage enhancement level 3, or in a coverage enhancement mode B, and the first TBS is less than or equal to N2, the first parameter is equal to 1, where N2 is a positive integer specified in advance.

The network device and the terminal device may set different first parameters for different terminal devices based on coverage enhancement levels or coverage enhancement modes of the terminal devices. In this way, the communication quality is further improved and the data transmission delay is further reduced.

In some possible implementations, N1 is equal to any one of 408, 504, and 600; or N2 is equal to any one of 408, 456, 504, and 600.

In some possible implementations, the preset TBS set is {T1, T2, T3, T4}, T4 is the first TBS, T1<T2<T3<T4, T4 is greater than or equal to K, and K is a positive integer specified in advance; and

when the second TBS is equal to T4, T3, or T2, the first parameter is equal to 1; and/or

when the second TBS is equal to T1, the first parameter is equal to 1/2.

The network device and the terminal device may design the first parameter based on the second TBS and the first TBS, so that the terminal device can send the first data to the network device based on a proper TBS and/or a proper quantity of repetitions. In this way, the communication quality is further improved and the data transmission delay is further reduced.

In some possible implementations, K is equal to any one of 456, 504, and 600.

In some possible implementations, the first control information further includes first indication information, the first indication information indicates whether the terminal device transmits the first data based on the first quantity of repetitions or transmits the first data by using the second quantity of repetitions.

In this embodiment of this application, the network device may indicate whether the terminal device is allowed to update a quantity of data repetitions. In this way, the terminal device transmits data based on an indication of the network device, so that the network device and the terminal device communicate with each other by using a consistent quantity of repetitions and a consistent TBS, and therefore, the communication quality is improved.

In some possible implementations, the first control information further includes second indication information, the second indication information indicates a second parameter, and the method further includes:

determining a third quantity of repetitions based on the second parameter and the first quantity of repetitions; or determining a third quantity of repetitions based on the second parameter and the second quantity of repetitions; and transmitting the first data based on the third quantity of repetitions.

The network device may further indicate a quantity of retransmission times of the terminal device by using the second indication information, where the second indication information is carried in control information and the second indication information indicates the second parameter. Therefore, flexibility of indicating to update the quantity of retransmission times of the terminal device is improved.

In some possible implementations, the determining a third quantity of repetitions based on the second parameter and the first quantity of repetitions includes:

determining a product of the second parameter and the first quantity of repetitions as the third quantity of repetitions; or the determining a third quantity of repetitions based on the second parameter and the second quantity of repetitions includes:

determining a product of the second parameter and the second quantity of repetitions as the third quantity of repetitions.

In some possible implementations, values of the second parameter are 1/2 and 1; or

values of the second parameter are 1/4, 1/2, and 1; or

values of the second parameter are 1/8, 1/4, 1/2, and 1.

According to a second aspect, a data transmission method is provided. The method includes:

sending first configuration information, where the first configuration information is used to indicate a first transport block size TBS;

determining a preset TBS set based on the first TBS, where the preset TBS set includes one or more TBSs, and the first TBS is a largest TBS in the TBS set; and
receiving first data based on the one or more TBSs.

A network device receives the first data based on each TBS in the preset TBS set, so that a terminal device and the network device communicate with each other by using a consistent TBS, and therefore, communication quality is improved.

In some possible implementations, the method further includes:

sending first control information, where the first control information includes information about a first quantity of repetitions, and the information about the first quantity of repetitions indicates the first quantity of repetitions;
determining one or more first parameters based on the first TBS and/or the TBS in the preset TBS set;
determining one or more second quantities of repetitions based on the first quantity of repetitions and the one or more first parameters; and
receiving the first data based on the one or more second quantities of repetitions.

The network device determines the one or more corresponding first parameters based on the first TBS and each TBS in the preset TBS set, and determines a plurality of corresponding second quantities of repetitions based on the one or more first parameters and the first quantity of repetitions. The network device detects the first data based on each second quantity of repetitions and a corresponding TBS, so that the terminal device and the network device use a consistent quantity of repetitions and a consistent TBS, and therefore, the communication quality is improved.

In some possible implementations, the preset TBS set is $\{T1, T2, T3, T4\}$, T4 is the first TBS, and $T1<T2<T3<T4$; and
when T4 is greater than or equal to M, and a second TBS is equal to T4 or T3, the first parameter is equal to 1, where M is a positive integer specified in advance; and/or
when T4 is greater than or equal to M, and a second TBS is equal to T2 or T1, the first parameter is equal to 1/2; and/or
when T4 is less than M, the first parameter is equal to 1.

In some possible implementations, M is equal to 600.

In some possible implementations, if the terminal device is at a coverage enhancement level 0, at a coverage enhancement level 1, or in a coverage enhancement mode A, and the first TBS is less than or equal to N1, the first parameter is equal to 1, where N1 is a positive integer specified in advance; or
if the terminal device is at a coverage enhancement level 2, at a coverage enhancement level 3, or in a coverage enhancement mode B, and the first TBS is less than or equal to N2, the first parameter is equal to 1, where N2 is a positive integer specified in advance.

In some possible implementations, N1 is equal to any one of 408, 504, and 600; or N2 is equal to any one of 408, 456, 504, and 600.

In some possible implementations, the preset TBS set is $\{T1, T2, T3, T4\}$, T4 is the first TBS, $T1<T2<T3<T4$, T4 is greater than or equal to K, and K is a positive integer specified in advance; and
when a second TBS is equal to T4, T3, or T2, the first parameter is equal to 1; and/or
when a second TBS is equal to T1, the first parameter is equal to 1/2.

In some possible implementations, K is equal to any one of 456, 504, and 600.

In some possible implementations, the first control information further includes first indication information, the first indication information indicates whether the terminal device transmits the first data based on the first quantity of repetitions or transmits the first data by using the second quantity of repetitions.

In some possible implementations, the first control information further includes second indication information, the second indication information indicates a second parameter, the second parameter is used by the terminal device to determine a third quantity of repetitions, and the third quantity of repetitions is used for transmitting the first data.

According to a third aspect, a data transmission apparatus is provided. The apparatus may be a terminal device, or may be a chip in a terminal device. The apparatus has functions of implementing the embodiments of the first aspect. The functions may be implemented by hardware, or may be implemented by hardware executing corresponding software. The hardware or the software includes one or more units corresponding to the functions.

In a possible design, when the apparatus is a terminal device, the terminal device includes a processing module and a transceiver module. The processing module may be, for example, a processor. The transceiver module may be, for example, a transceiver, and the transceiver includes a radio frequency circuit. Optionally, the terminal device further includes a storage unit, and the storage unit may be, for example, a memory. When the terminal device includes the storage unit, the storage unit is configured to store a computer-executable instruction. The processing module is connected to the storage unit. The processing module executes the computer-executable instruction stored in the storage unit, so that the terminal device performs the data transmission method according to any implementation of the first aspect.

In another possible design, when the apparatus is a chip in a terminal device, the chip includes a processing module and a transceiver module. The processing module may be, for example, a processor. The transceiver module may be, for example, an input/output interface, a pin, or a circuit on the chip. The processing module may execute a computer-executable instruction stored in a storage unit, so that the chip in the terminal performs the data transmission method according to any implementation of the first aspect. Optionally, the storage unit is a storage unit in the chip, for example, a register or a cache, or the storage unit may be a storage unit in the terminal device but outside the chip, for example, a read-only memory (read-only memory, ROM) or another type of static storage device capable of storing static information and instructions, or a random access memory (random access memory, RAM).

The processor mentioned in any one of the foregoing designs may be a general-purpose central processing unit (CPU), a microprocessor, an application-specific integrated circuit (application-specific integrated circuit, ASIC), or one or more integrated circuits for controlling program execution of the data transmission method according to the first aspect.

According to a fourth aspect, a data transmission apparatus is provided. The apparatus may be a network device, or may be a chip in a network device. The data transmission apparatus has functions of implementing the embodiments of the second aspect. The functions may be implemented by hardware, or may be implemented by hardware executing corresponding software. The hardware or the software includes one or more units corresponding to the functions.

In a possible design, when the data transmission apparatus is a network device, the network device includes a processing module and a transceiver module. The processing module may be, for example, a processor. The transceiver module may be, for example, a transceiver, and the transceiver includes a radio frequency circuit. Optionally, the network device further includes a storage unit, and the storage unit may be, for example, a memory. When the network device includes the storage unit, the storage unit is configured to store a computer-executable instruction. The processing module is connected to the storage unit. The processing module executes the computer-executable instruction stored in the storage unit, so that the network device performs the data transmission method according to any implementation of the second aspect.

In another possible design, when the apparatus is a chip in a network device, the chip includes a processing module and a transceiver module. The processing module may be, for example, a processor. The transceiver module may be, for example, an input/output interface, a pin, or a circuit on the chip. The processing module may execute a computer-executable instruction stored in a storage unit, so that the chip in the network device performs the data transmission method according to any implementation of the second aspect. Optionally, the storage unit is a storage unit in the chip, for example, a register or a cache, or the storage unit may be a storage unit in the network device but outside the chip, for example, a ROM or another type of static storage device capable of storing static information and instructions, or a RAM

The processor mentioned in any one of the foregoing designs may be a CPU, a microprocessor, an ASIC, or one or more integrated circuits for controlling program execution of the data transmission method according to the second aspect.

According to a fifth aspect, a computer storage medium is provided. The computer storage medium stores program code. The program code is used to instruct to execute an instruction of the method according to any one of the first aspect, the second aspect, or the possible implementations of the first aspect or the second aspect.

According to a sixth aspect, a computer program product including an instruction is provided. When the computer program product is run on a computer, the computer is enabled to perform the method according to any one of the first aspect, the second aspect, or the possible implementations of the first aspect or the second aspect.

According to a seventh aspect, a communications system is provided. The communications system includes the apparatus according to the third aspect and the apparatus according to the fourth aspect.

According to an eighth aspect, a processor is provided. The processor is coupled to a memory, and is configured to perform the method according to any one of the first aspect, the second aspect, or the possible implementations of the first aspect or the second aspect.

According to the foregoing solutions, the terminal device may determine the preset TBS set based on the first TBS configured by the network device, determine, in the preset TBS set, the second TBS for transmitting the first data, and send the first data based on the second TBS. In other words, the terminal device can select the proper TBS based on the data volume. Therefore, the data transmission delay is reduced.

**BRIEF DESCRIPTION OF DRAWINGS**

FIG. 1 is a schematic diagram of a communications system according to this application;
FIG. 2 is a schematic flowchart of data transmission in a conventional solution;

FIG. 3 is a schematic structural diagram of a medium access control (Medium Access Control, MAC) protocol data unit (Protocol Data Unit, PDU);

FIG. 4 is a schematic diagram of a structure of a MAC random access response (Random Access Response, RAR);

FIG. 5 is a schematic diagram of another structure of a MAC RAR;

FIG. 6 is a schematic flowchart of a data transmission method according to an embodiment of this application;

FIG. 7 is a schematic block diagram of a data transmission apparatus according to an embodiment of this application;

FIG. 8 is a schematic structural diagram of a data transmission apparatus according to an embodiment of this application;

FIG. 9 is a schematic block diagram of a data transmission apparatus according to another embodiment of this application;

FIG. 10 is a schematic structural diagram of a data transmission apparatus according to another embodiment of this application; and

FIG. 11 is a schematic block diagram of a communications system for data transmission according to an embodiment of this application.

## DETAILED DESCRIPTION OF EMBODIMENTS

The following describes technical solutions of this application with reference to the accompanying drawings.

The technical solutions in embodiments of this application may be applied to various communications systems, for example, a global system for mobile communications (Global System for Mobile Communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a future 5th generation (5th Generation, 5G) system, or a new radio (New Radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application.

A network device in the embodiments of this application may be a device configured to communicate with the terminal device. The network device may be a base transceiver station (Base Transceiver Station, BTS) in a global system for mobile communications (Global System for Mobile communications, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (Evolutional NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

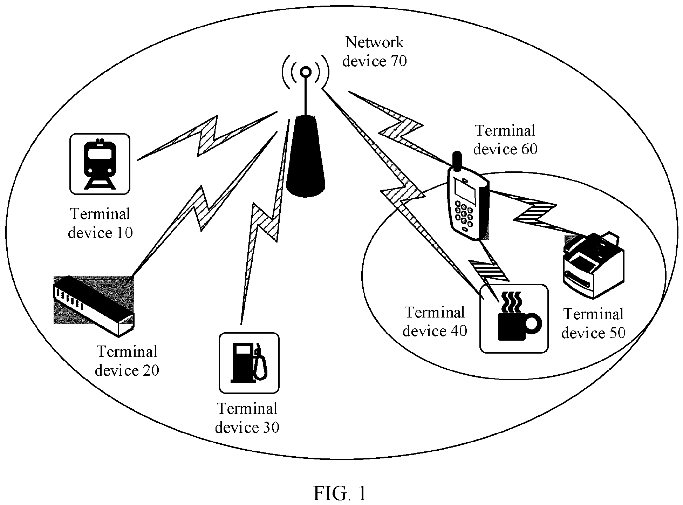

FIG. 1 is a schematic diagram of a communications system according to this application. The communications system in FIG. 1 may include at least one terminal device (for example, a terminal device 10, a terminal device 20, a terminal device 30, a terminal device 40, a terminal device 50, and a terminal device 60) and a network device 70. The network device 70 is configured to provide a communications service for the terminal device and enables the terminal device to access a core network. The terminal device may access a network by searching for a synchronization signal, a broadcast signal, or the like sent by the network device 70, to communicate with the network. In FIG. 1, the terminal device 10, the terminal device 20, the terminal device 30, the terminal device 40, and the terminal device 60 may directly perform uplink/downlink transmission with the network device 70. In addition, the terminal device 40, the terminal device 50, and the terminal device 60 may also be considered as a communications system, and the terminal device 60 may send scheduling information to the terminal device 40 and the terminal device 60.

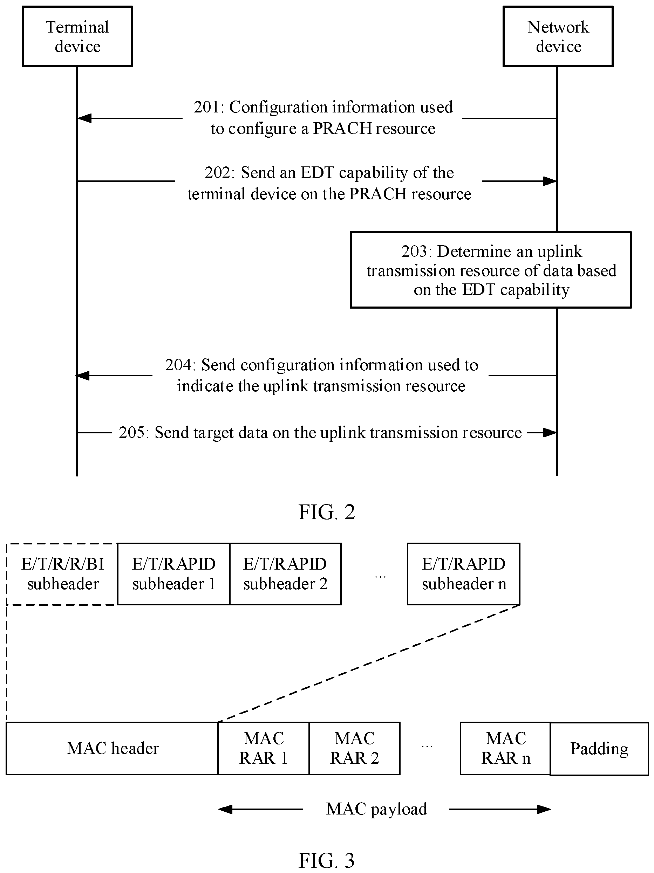

FIG. 2 is a schematic flowchart of data transmission in a conventional solution.

201: A network device sends configuration information to a terminal device, where the configuration information is used to indicate a physical random access channel (Physical Random Access Channel, PRACH) resource.

202: The terminal device receives the configuration information, and sends a random access preamble sequence on the physical random access channel resource indicated by the configuration information. The terminal device reports, by using a time resource of a PRACH, a frequency domain resource of the PRACH, or the random access preamble sequence, whether the terminal device supports EDT.

203: The network device determines an uplink transmission resource of data based on an EDT capability of the terminal device and whether the network device enables the EDT capability of the terminal device.

204: The network device sends configuration information to the terminal device, to indicate the uplink transmission resource of the data.

205: The terminal device sends first data on the uplink transmission resource.

Specifically, if the uplink transmission resource in step 204 is a resource used for initial data transmission, the uplink transmission resource of the data may be indicated by using an uplink grant in a MAC PDU. FIG. 3 is a schematic structural diagram of a medium access control (Medium Access Control, MAC) protocol data unit (Protocol Data Unit, PDU). The MAC PDU includes a MAC header and at least one MAC random access response (Random Access Response, RAR). Optionally, the MAC PDU may further include padding. A subheader 1, a subheader 2, ..., and a subheader n in the MAC header have a one-to-one correspondence with a MAC RAR 1, a MAC RAR 2, ..., and a MAC RAR n.

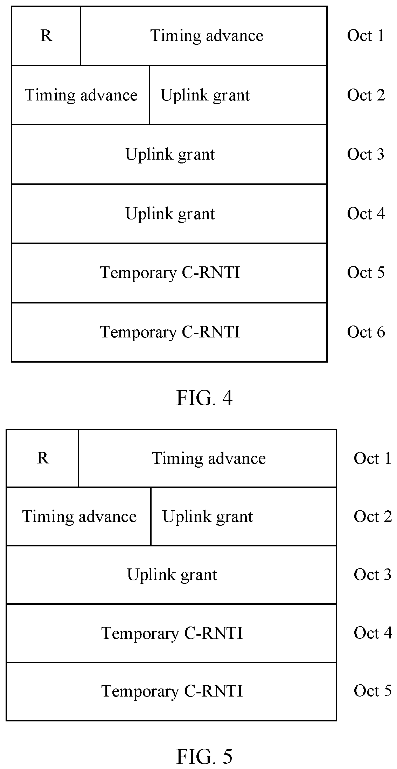

In addition, the MAC RAR includes two types of structures, and different types of structures of the MAC RAR may be applied to scenarios with different channel quality. FIG. 4 is a schematic diagram of a structure of a MAC RAR. As shown in FIG. 4, the structure of the MAC RAR may correspond to a scenario of a coverage enhancement level 0 or 1 in an idle mode. FIG. 5 is a schematic diagram of another structure of a MAC RAR. As shown in FIG. 5, the structure of the MAC RAR may correspond to a scenario of a coverage enhancement level 2 or 3 in an idle mode. The structure of the MAC RAR includes an R field, a timing advance (Timing Advance, TA) field, an uplink grant (UL Grant) field, and a temporary cell radio network temporary identifier (Temporary C-RNTI) field. R is a reserved bit. The TA is used to control a timing adjustment amount, and the TA occupies 11 bits. The uplink grant is used to indicate an uplink transmission resource.

It should be noted that uplink grants in FIG. 4 occupy 2 bytes+4 bits=20 bits, and uplink grants in FIG. 5 occupy 12 bits.

It should be understood that a mode corresponding to the coverage enhancement level 0 or 1 in the idle mode is a "coverage enhancement (coverage enhancement, CE) mode (mode) A", and a mode corresponding to the coverage enhancement level 2 or 3 in the idle mode is a "CE mode B".

The uplink grant field specifically includes: a message (Message) 3 physical uplink shared channel (Physical Uplink Shared Channel, PUSCH) narrowband index (narrowband index) field, a message 3 PUSCH resource allocation (Resource allocation) field, a quantity of repetitions for a message 3 PUSCH field, a transmit power control (transmit power control, TPC) field, a channel state information (channel state information, CSI) request (request) field, an uplink (uplink, UL) delay (delay) field, a message 3/4 MPDCCH narrowband index field, and a zero padding (Zero padding) field. In the CE mode B, the uplink grant field further includes a TBS field. In the CE mode A, the uplink grant field further includes a modulation and coding scheme (Modulation and Coding Scheme, MCS) field.

Table 1 shows an occupation status of bits of the uplink grant field in the CE mode A and the CE mode B.

Table 1

| Content of the uplink grant field | CE mode A | CE mode B |
|---|---|---|
| Msg 3 PUSCH narrowband index | $N_{\mathrm{NB}}^{index}$ | 2 |
| Msg 3 PUSCH resource allocation | 4 | 3 |
| Number of repetitions for Msg 3 PUSCH | 2 | 3 |
| MCS | 3 | 0 |
| TBS | 0 | 2 |
| TPC | 3 | 0 |
| CSI request | 1 | 0 |
| UL delay | 1 | 0 |
| Msg 3/4 MPDCCH narrowband index | 2 | 2 |

(continued)

| Content of the uplink grant field | CE mode A | CE mode B |
|---|---|---|
| Zero padding | $4-N_{\text{NB}}^{index}$ | 0 |
| All bits | 20 | 12 |

$N_{\text{NB}} = \lfloor N_{\text{RB}}^{\text{UL}} / 6 \rfloor$, $N_{NB}$ represents a quantity of narrowbands in system bandwidth, $N_{RB}^{UL}$ represents a quantity of RBs in uplink system bandwidth, $N_{\text{NB}}^{index} = \lceil \log_2(N_{\text{NB}}) \rceil$, and $N_{NB}^{index}$ represents a quantity of bits used to indicate a narrowband index.

It can be learned from Table 1 that the quantity of repetitions for the message 3 PUSCH occupies 2 bits in the CE mode A. A correspondence between values of the 2 bits and quantities of repetitions for the message 3 PUSCH is shown in Table 2.

**Table 2**

| Value of the bits of the quantity of repetitions for the message 3 PUSCH | Quantity of repetitions for the message 3 PUSCH |
|---|---|
| '00' | $Y_A/8$ |
| '01' | $Y_A/4$ |
| '10' | $Y_A/2$ |
| '11' | $Y_A$ |

$Y_A$ represents a maximum quantity of repetitions in the CE mode A, and $Y_A$ may be indicated by using higher layer signaling. For example, higher layer signaling indicates that $Y_A$=8.

It can be learned from Table 2 that the quantity of repetitions for the message 3 PUSCH occupies 3 bits in the CE mode B. A correspondence between values of the 3 bits and quantities of repetitions for the message 3 PUSCH is shown in Table 3.

**Table 3**

| Value of the bits of the quantity of repetitions for the message 3 PUSCH | Quantity of repetitions for the message 3 PUSCH |
|---|---|
| '000' | $Y_B/128$ |
| '001' | $Y_B/64$ |
| '010' | $Y_B/32$ |
| '011' | $Y_B/16$ |
| '100' | $Y_B/8$ |
| '101' | $Y_B/4$ |
| '110' | $Y_B/2$ |
| '111' | $Y_B$ |

$Y_B$ may be indicated by using higher layer signaling. For example, higher layer signaling indicates that $Y_B$=128.

If the uplink transmission resource in step 204 is a resource used for message 3 retransmission, the network device may send downlink control information to the terminal device, where the downlink control information may indicate an uplink transmission resource used for data retransmission. The network device may further send higher layer signaling to the terminal device, where the higher layer signaling indicates a set of preset quantities of repetitions. The network device indicates, by using the downlink control information, a specific quantity of repetitions in the set of quantities of repetitions. The set of quantities of repetitions includes at least one quantity of repetitions, and both the network device and the terminal device can learn of each element in the set of quantities of repetitions. Table 4 shows a set of quantities of repetitions in the CE mode A. For example, higher layer signaling may indicate that a higher layer signaling parameter is 16 or 32, and each higher layer signaling parameter corresponds to one set of quantities of repetitions. Table 5 shows a set of quantities of repetitions in the CE mode B.

**Table 4**

| Higher layer signaling parameter | {n1, n2, n3, n4} |
|---|---|
| Not configured | {1, 2, 4, 8} |
| 16 | {1, 4, 8, 16} |
| 32 | {1, 4, 16, 32} |

**Table 5**

| Higher layer signaling parameter | {n1, n2, ..., n8} |
|---|---|
| Not configured | {4, 8, 16, 32, 64, 128, 256, 512} |
| 192 | {1, 4, 8, 16, 32, 64, 128, 192} |
| 256 | {4, 8, 16, 32, 64, 128, 192, 256} |
| 384 | {4, 16, 32, 64, 128, 192, 256, 384} |
| 512 | {4, 16, 64, 128, 192, 256, 384, 512} |
| 768 | {8, 32, 128, 192, 256, 384, 512, 768} |
| 1024 | {4, 8, 16, 64, 128, 256, 512, 1024} |
| 1536 | {4, 16, 64, 256, 512, 768, 1024, 1536} |
| 2048 | {4, 16, 64, 128, 256, 512, 1024, 2048} |

The network device may further configure a transport block size (Transport block size, TBS) for the terminal device. Usually, the TBS is a maximum TBS that can be configured by the network device for the terminal device, and the terminal device transmits data based on the maximum TBS, so that a data transmission delay between the terminal device and the network device is relatively high.

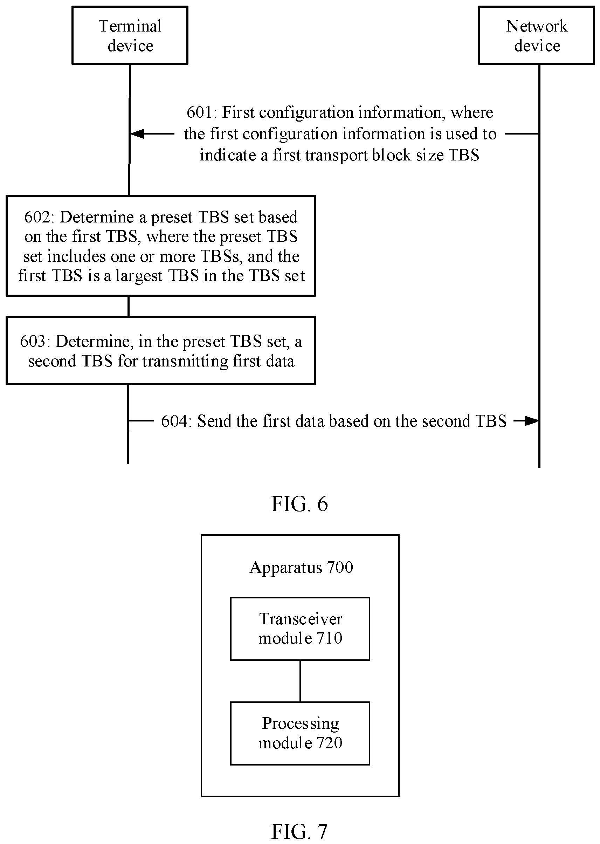

FIG. 6 is a schematic flowchart of a data transmission method according to an embodiment of this application.

601: A terminal device receives first configuration information, where the first configuration information is used to indicate a first TBS. Correspondingly, a network device sends the first configuration information.

Specifically, the network device may configure the first TBS for the terminal device based on channel quality, and the first TBS is usually a maximum TBS configured by the network device for the terminal device with reference to the channel quality.

It should be noted that the first TBS and a quantity of repetitions are associated with each other. For example, a larger TBS corresponds to a larger quantity of repetitions. In other words, a larger TBS indicates a higher possibility of a transmission failure, and therefore, a larger quantity of retransmission times is required to ensure transmission performance.

Optionally, the network device may send first control information to the terminal device, where the first control information includes information about a first quantity of repetitions, and the information about the first quantity of repetitions indicates the first quantity of repetitions. Correspondingly, the terminal device may receive the first control information.

Optionally, the network device may determine whether the terminal device is allowed to update a quantity of data repetitions.

Specifically, the network device may determine, based on a channel condition, network load, or situations of previous several times of HARQ transmission, whether the quantity of repetitions can be reduced, and indicate, to the terminal device by using configuration information, whether the terminal device is allowed to update the quantity of data repetitions.

It should be noted that the network device may independently send the configuration information to indicate whether the terminal device is allowed to update the quantity of data repetitions, or may include the configuration information in another message or other signaling to indicate whether the terminal device is allowed to update the quantity of data repetitions. This is not limited in this application.

Optionally, the first control information may further include first indication information, where the first indication information may indicate whether the terminal device is allowed to update the quantity of data repetitions. In other words, the first indication information indicates whether the terminal device transmits first data based on the first quantity of repetitions or transmits the first data by using a second quantity of repetitions.

It should be noted that the second quantity of repetitions herein is different from the first quantity of repetitions.

Specifically, the first indication information may further indicate an uplink resource for transmitting the first data. In this embodiment of this application, the network device can release or reuse a field or a status used to indicate the uplink resource for transmitting the first data, or fully use an idle field or status used to indicate the uplink resource for transmitting the first data, to indicate whether the terminal device is allowed to update the quantity of data repetitions. In this way, the terminal device transmits the data based on an indication of the network device, so that the network device and the terminal device communicate with each other by using a consistent quantity of repetitions and a consistent TBS, and therefore, communication quality is improved.

Releasing a field or a status may be understood as limiting an original function of the field, so that the field or the status can be used to indicate whether the terminal device is allowed to update the quantity of data repetitions. For example, a field used to indicate an MCS value includes 4 bits, and MCS values corresponding to 16 states of the 4 bits may be indicated by using the 4 bits. In this embodiment of this application, a quantity of bits used to indicate the MCS value is limited.

For example, only 3 bits are used to indicate MCS values corresponding to 8 states of the 3 bits, and a remaining 1 bit is used to indicate whether the terminal device is allowed to update the quantity of data repetitions. Specifically, when the 1 bit is set to "1", it indicates that the terminal device is allowed to update the quantity of data repetitions, and when the 1 bit is set to "0", it indicates that the terminal device is not allowed to update the quantity of data repetitions.

For another example, first 14 states indicated by the 4 bits are used to indicate MCS values, and the other two states are used to indicate whether the terminal device is allowed to update the quantity of data repetitions. Specifically, when the 4 bits are set to "1110", it indicates that the terminal device is allowed to update the quantity of data repetitions, and when the 4 bits are set to "1111", it indicates that the terminal device is not allowed to update the quantity of data repetitions.

Reusing a field may be understood as that the field has both an original function and a new function. For example, if the terminal device detects that a state of the 4 bits is "1111", the terminal device can learn of an MCS value corresponding to 15, and can also learn that the network device does not allow the terminal device to update the quantity of data repetitions.

Fully using an idle status may be understood as that a state originally used for an original function does not need to be indicated in current transmission or the state is a reserved state. For example, when the network device configures a data retransmission resource for the terminal device, an MCS value does not need to be indicated, but configuration information still includes a field or a status used to indicate the MCS value. In this case, the network device may indicate, by using the field or the status, whether the terminal device is allowed to update the quantity of data repetitions. Correspondingly, when detecting that resource configuration is retransmission resource configuration, the terminal device may use the status originally used to indicate the MCS value as the status used to determine whether the terminal device is allowed to update the quantity of data repetitions.

Optionally, in this embodiment of this application, the first indication information may be a MAC RAR. The MAC RAR includes an uplink grant field, the uplink grant field includes M bits, N bits in the M bits are used to indicate whether the terminal device is allowed to update the quantity of data repetitions, and remaining M-N bits in the M bits are used to indicate the uplink resource for transmitting the first data. Alternatively, a first state and a second state that are represented by the M bits are used to indicate whether the terminal device is allowed to update the quantity of data repetitions, and another state, other than the first state and the second state, that is represented by the M bits is used to indicate the uplink resource for transmitting the first data. In other words, the N bits may be reserved bits, released bits, or reused bits.

Specifically, the uplink grant field may include a plurality of types of fields, as shown in Table 1. The field used to indicate whether the terminal device is allowed to update the quantity of data repetitions may be any type of field included in the uplink grant field, or two statuses represented by any type of field included in the uplink grant field indicate whether the terminal device is allowed to update the quantity of data repetitions.

Optionally, the N bits are in an MCS field or a TBS field in the uplink grant field. In other words, the N field in the MCS field or the TBS field are used to indicate whether the terminal device is allowed to update the quantity of data repetitions.

Specifically, when structures of the MAC RAR are different, quantities of bits occupied by the uplink grant field are different. For example, when the MAC RAR is in a CE mode A, the uplink grant field includes the MCS field; when the MAC RAR is in a CE mode B, the uplink grant field includes the TBS field, as shown in Table 1.

For example, in a conventional solution, if an MCS field includes 4 bits to indicate an MCS value, in this embodiment of this application, it may be limited that the MCS field indicates an MCS value by using 3 bits, and 1 bit is used to indicate whether the terminal device is allowed to update the quantity of data repetitions.

Optionally, the first indication information is physical downlink control information. The physical downlink control information includes a resource allocation field, the resource allocation field includes L bits, K bits in the L bits are used to indicate whether the terminal device is allowed to update the quantity of data repetitions, L-K bits are used to indicate the uplink resource for transmitting the first data, L and K are positive integers, and L≥K.

Specifically, if the uplink transmission resource is a resource used to retransmit the first data, the first control information may be physical downlink control information, for example, DCI in a DCI format (format) 6-0A. The DCI in the DCI format (format) 6-0A includes a resource allocation (resource block assignment) field, the resource allocation field includes L bits, K bits in the L bits may be used to indicate whether the terminal device is allowed to update the quantity of data repetitions, and remaining L-K bits are used to indicate the uplink resource for transmitting the first data.

For example, if the resource block assignment field occupies $\left\lceil \log_2 \left\lfloor \dfrac{N_{RB}^{UL}}{6} \right\rfloor \right\rceil + 5$ bits, $\left\lceil \log_2 \left\lfloor \dfrac{N_{RB}^{UL}}{6} \right\rfloor \right\rceil + 4$

bits may be used to indicate the uplink transmission resource for transmitting the first data, and the remaining 1 bit is used to indicate whether the terminal device is allowed to update the quantity of data repetitions.

Optionally, the first control information is physical downlink control information. The physical downlink control information includes an uplink grant field, the uplink grant field includes L bits, K bits in the L bits are used to indicate whether the terminal device is allowed to update the quantity of data repetitions, L-K bits are used to indicate the uplink resource for transmitting the first data, L and K are positive integers, and L≥K.

Optionally, the K bits are in an MCS field in the uplink grant field.

Specifically, when the uplink transmission resource is a resource used to retransmit the first data, and the network device does not need to indicate an MCS value, all or some bits in the MCS field may be used to indicate whether the terminal device is allowed to update the quantity of data repetitions. If the network device still needs to indicate an MCS value, the network device may indicate, by limiting a quantity of bits or a status indicated by a bit, whether the terminal device is allowed to update the quantity of data repetitions.

Optionally, the first indication information includes a resource allocation field, and the resource allocation field may be used to indicate a resource of a sub (sub)-PRB.

Specifically, in R15, to support sub-PRB resource allocation, 2 bits or 3 bits are newly added to the resource allocation field. If a bit has been newly added to the resource allocation field, but the bit has not been used to indicate the sub-PRB resource allocation, the newly added bit may be used to indicate whether the terminal device is allowed to update the quantity of data repetitions.

602: The terminal device determines a preset TBS set based on the first TBS, where the preset TBS set includes one or more TBSs, and the first TBS is a largest TBS in the TBS set.

Specifically, the terminal device and the network device may agree in advance on a plurality of preset TBSs. The network device sends the first configuration information to indicate the first TBS configured by the network device, and the terminal device determines, in at least one preset TBS that is less than or equal to the first TBS, the preset TBS set based on the first TBS.

For example, the preset TBSs agreed on by the terminal device and the network device are 328, 408, 504, and 600. If the first TBS indicated by the first configuration information is 504, the terminal device may determine the three preset TBSs 328, 408, and 504 as the preset TBS set.

603: The terminal device determines, in the preset TBS set, a second TBS for transmitting the first data.

Specifically, the terminal device selects the second TBS that can properly transmit the first data. For example, the terminal device selects the proper second TBS based on a data volume of the first data, and therefore, a transmission delay is reduced while the transmission performance is ensured.

Optionally, the terminal device may further receive the first control information, where the first control information includes the information about the first quantity of repetitions, and the information about the first quantity of repetitions indicates the first quantity of repetitions. In this way, the terminal device may determine a first parameter based on the first TBS and/or the second TBS, and determine the second quantity of repetitions based on the first quantity of repetitions and the first parameter, where the second quantity of repetitions is used to indicate a quantity of repetitions for transmitting the first data.

Specifically, a first parameter and a TBS may associate with each other, to be specific, the corresponding first parameter can be determined based on the first TBS and/or the second TBS. In this way, the second quantity of repetitions is determined based on the first parameter and the first quantity of repetitions, where the second quantity of repetitions may be used to indicate the quantity of repetitions for transmitting the first data.

Optionally, a value of the first parameter may be at least one of 1/8, 1/4, 1/2, and 1.

Optionally, values of the first parameter may be at least one of {1/2, 1}, {1/4, 1/2, 1}, and {1/8, 1/4, 1/2, 1}.

Optionally, the terminal device may send the first data based on the second quantity of repetitions.

Optionally, the terminal device may directly store a target mapping relationship, and the target mapping relationship may be a mapping relationship between a TBS and a first parameter.

Specifically, the target mapping relationship may be a one-to-one correspondence between at least one TBS and at least one parameter, or may be a correspondence between at least one TBS and one parameter. In other words, the terminal device can find, from the target mapping relationship, a parameter corresponding to a specific TBS. The terminal device may learn of, based on the target mapping relationship, the first parameter corresponding to the second TBS. In addition, the target mapping relationship is a mapping relationship consistently used by the terminal device and the network device. In this way, the terminal device and the network device can use a consistent quantity of repetitions, and therefore, communication quality is improved.

Alternatively, the target mapping relationship may be a one-to-one correspondence between at least one TBS in the TBS set and at least one parameter, or may be a correspondence between at least one TBS in the TBS set and one parameter. In other words, the terminal device may determine, based on the target mapping relationship, the first parameter corresponding to the first TBS.

Optionally, the target mapping relationship may alternatively be a mapping relationship among at least one TBS, at least one parameter, and at least one first TBS.

Specifically, first TBSs indicated by different configuration information are different, and correspondences between TBSs in the preset TBS set and parameters may also be different. In other words, the second quantity of repetitions determined by the terminal device is combined with the first TBS configured by the network device and the second TBS, to further improve the communication quality.

Optionally, the target mapping relationship may be represented in a form of a table, for example, as shown in Table 6.

**Table 6**

|  | TBS 1 indicated by configuration information | TBS 2 indicated by configuration information |
|---|---|---|
| TBS 1 in the preset TBS set | Parameter n1 | Parameter n2 |
| TBS 2 in the preset TBS set | - | Parameter n3 |

Optionally, the first parameter, the first TBS, and the second TBS meet the following relationship. For example, the preset TBS set includes four TBSs ({T1, T2, T3, T4}), T1<T2<T3<T4, and T4 is the first TBS. When T4≥M, if the second TBS is T4 or T3, the first parameter is 1; and/or if the second TBS is T2 or T1, the first parameter is 1/2.

Optionally, when T4≤M, the first parameter is 1. M is an integer specified in advance.

Optionally, M may be 600.

Optionally, the first parameter, the first TBS, and the second TBS may meet the following relationship. For example, the preset TBS set includes two TBSs ({T1, T2}), T2 is the first TBS, and the first parameter is 1.

Optionally, the preset TBS set includes three TBSs ({T1, T2, T3}), T3 is the first TBS, and the first parameter is 1.

Optionally, the preset TBS set includes one TBS, and the first parameter is 1.

Optionally, the first parameter, the first TBS, and the second TBS may alternatively meet the following relationship. The preset TBS set includes four TBSs ({T1, T2, T3, T4}), T1<T2<T3<T4, and T4 is the first TBS. When T4≥K, if the second TBS is T4, T3, or T2, the first parameter is 1; and/or if the second TBS is T1, the first parameter is 1/2. K is an integer specified in advance.

Optionally, K may be any one of 456, 504, and 600.

Optionally, a value of the first parameter may be further associated with a mode of the terminal device. If the terminal device is at a coverage enhancement level 0, at a coverage enhancement level 1, or in a coverage enhancement mode A, and the first TBS≤N1, the first parameter is 1, where N1 is a preset positive integer. If the terminal device is at a coverage enhancement level 2, at a coverage enhancement level 3, or in a coverage enhancement mode B, and the first TBS≤N2, the first parameter is 1, where N2 is a preset positive integer.

It should be noted that a quantity of TBSs in the preset TBS set is not limited in this embodiment of this application, and the preset TBS set may include two TBSs, three TBSs, four TBSs, or the like.

Optionally, N1 may be any one of 408, 504, and 600. N2 may be any one of 408, 456, 504, and 600.

Optionally, the first parameter is a quantity of repetitions reduction factor k, and the terminal device may determine a product of the first quantity of repetitions and k as the second quantity of repetitions.

For example, if k=0.5, and a quantity of repetitions corresponding to the TBS indicated by the first configuration information is 64, a target quantity of repetitions is 32.

Optionally, the terminal device may alternatively determine a difference between the first quantity of repetitions and a product of k and the first quantity of repetitions as the second quantity of repetitions. That is, the second quantity of repetitions=the first quantity of repetitions-the first quantity of repetitions*k.

Optionally, the network device may determine, based on the channel quality, a specific structure of a MAC RAR to be configured for the terminal device, that is, a length of a resource allocation field. For example, in Table 1, the resource allocation field is an uplink grant field, and a length of the uplink grant field may be 20 bits or 12 bits. Correspondingly, when the length of the uplink grant field is 20 bits, a corresponding CE level is 0/1 (that is, the CE mode A), and when the length of the uplink grant field is 12 bits, a corresponding CE level is 2/3 (that is, the CE mode B).

Optionally, the terminal device may determine, based on the length of the resource allocation field, a CE level configured by the network device for the terminal device.

Optionally, the terminal device and the network device may agree on that different CE levels correspond to different mapping relationships. In this way, after learning of the CE level, the terminal device selects a target mapping relationship from at least two mapping relationships. For example, the CE mode A corresponds to a first mapping relationship, and the CE mode B corresponds to a second mapping relationship, so that the quantity of repetitions is larger when a channel condition is poor, and the quantity of repetitions is smaller when the channel condition is good.

Optionally, values of a second parameter are 1/2 and 1.

For example, Table 7 shows the first mapping relationship, and Table 8 shows the second mapping relationship.

Table 7

|    | 328 | 408 | 504 | 600 | 712 | 808 | 936 | 1000 |
|----|-----|-----|-----|-----|-----|-----|-----|------|
| T1 | 1.0 | 1.0 | 1.0 | 0.5 | 0.5 | 0.5 | 0.5 | 0.5  |
| T2 | -   | 1.0 | 1.0 | 0.5 | 0.5 | 0.5 | 0.5 | 0.5  |
| T3 | -   | -   | 1.0 | 1.0 | 1.0 | 1.0 | 1.0 | 1.0  |
| T4 | -   | -   | 1.0 | 1.0 | 1.0 | 1.0 | 1.0 | 1.0  |

Table 8

|    | 328 | 408 | 504 | 600 | 712 | 808 | 936 | 1000 |
|----|-----|-----|-----|-----|-----|-----|-----|------|
| T1 | 1.0 | 1.0 | 1.0 | 0.5 | 0.5 | 0.5 | 0.5 | 0.5  |
| T2 | -   | 1.0 | 1.0 | 1.0 | 1.0 | 1.0 | 1.0 | 1.0  |
| T3 | -   | -   | 1.0 | 1.0 | 1.0 | 1.0 | 1.0 | 1.0  |
| T4 | -   | -   | -   | 1.0 | 1.0 | 1.0 | 1.0 | 1.0  |

Optionally, the terminal device may alternatively determine, based on a value relationship between the second quantity of repetitions and a preset threshold of the quantity of repetitions, whether to use the first quantity of repetitions or the second quantity of repetitions. Specifically, if the second quantity of repetitions is greater than or equal to the preset threshold of the quantity of repetitions, the terminal device transmits the first data by using the second quantity of repetitions; if the second quantity of repetitions is less than the preset threshold of the quantity of repetitions, the terminal device transmits the first data based on the first quantity of repetitions.

For example, the preset threshold of the quantity of repetitions is set to 2. If the second quantity of repetitions is 2 and k=0.5, the quantity of repetitions is reduced to 1. In this case, the terminal device may transmit the first data based on the first quantity of repetitions.

Optionally, the terminal device may alternatively determine, based on a value relationship between the second quantity of repetitions and a smallest quantity of repetitions in a set of quantities of repetitions, whether to use the first quantity of repetitions or the second quantity of repetitions. Specifically, if the second quantity of repetitions is greater than or equal to the smallest quantity of repetitions in the set of quantities of repetitions, the terminal device transmits the first data by using the second quantity of repetitions; if the second quantity of repetitions is less than the smallest quantity of repetitions in the set of quantities of repetitions, the terminal device transmits the first data based on the first quantity of repetitions.

For example, as shown in Table 5, if the first quantity of repetitions is 256, and a set of quantities of repetitions that corresponds to 256 is {4, 8, 16, 32, 64, 128, 192}, a smallest quantity of repetitions in the set of quantities of repetitions is 4; and if the second quantity of repetitions is 3, the terminal device transmits the first data by using the second quantity of repetitions.

Optionally, the network device may further indicate a quantity of retransmission times of the terminal device by using second indication information, where the second indication information is carried in control information and the second indication information indicates the second parameter. Correspondingly, the terminal device receives the second indication information.

Specifically, the terminal device may determine a third quantity of repetitions based on the second parameter in the second indication information and the first quantity of repetitions or the second quantity of repetitions, and transmit the first data based on the third quantity of repetitions.

Optionally, that the terminal device determines the third quantity of repetitions based on the first quantity of repetitions and the second parameter may be: determining a product of the first quantity of repetitions and the second parameter as the third quantity of repetitions.

Optionally, that the terminal device determines the third quantity of repetitions based on the second quantity of repetitions and the second parameter may also be: determining a product of the second quantity of repetitions and the second parameter as the third quantity of repetitions.

Optionally, the second parameter may be a quantity of repetitions reduction factor k.

Optionally, the terminal device may alternatively determine a difference between the first quantity of repetitions and a product of k and the first quantity of repetitions as the third quantity of repetitions. That is, the third quantity of repetitions=the first quantity of repetitions-the first quantity of repetitions*k.

Optionally, the terminal device may alternatively determine a difference between the second quantity of repetitions and a product of k and the second quantity of repetitions as the third quantity of repetitions. That is, the third quantity of repetitions=the first quantity of repetitions-the second quantity of repetitions*k.

Optionally, a value of the second parameter may be at least one of 1/8, 1/4, 1/2, and 1.

Optionally, values of the second parameter may be at least one of {1/2, 1}, {1/4, 1/2, 1}, and {1/8, 1/4, 1/2, 1}.

604: The terminal device sends the first data based on the second TBS. Correspondingly, the network device receives the first data based on each TBS in the preset TBS set.

Optionally, the terminal device sends the first data based on the second quantity of repetitions and the second TBS.

The terminal device can send the first data based on the proper target quantity of repetitions and the second TBS, so that the transmission performance can be improved and the transmission delay can be reduced.

Optionally, the network device determines one or more corresponding first parameters based on the first TBS and each TBS in the preset TBS set, and determines one or more corresponding second quantities of repetitions based on the one or more first parameters and the first quantity of repetitions. The network device detects the first data based on each second quantity of repetitions and a TBS corresponding to each second quantity of repetitions, so that the terminal device and the network device use a consistent quantity of repetitions and a consistent TBS, and therefore, the communication quality is improved.

In other words, the network device needs to determine a first parameter based on the first TBS and a specific TBS in the preset TBS set, and determine a second quantity of repetitions based on the first parameter and the first quantity of repetitions. In addition, the network device performs a second quantity of repetitions corresponding to another TBS in the preset TBS set. In other words, the network device needs to blindly detect the first data based on the TBS and the corresponding quantity of repetitions.

Therefore, according to the data transmission method in this embodiment of this application, the terminal device may determine the preset TBS set based on the first TBS configured by the network device, determine, in the preset TBS set, the second TBS for transmitting the first data, and send the first data based on the second TBS. In other words, the terminal device can select a proper TBS based on the data volume, and therefore, the data transmission delay is reduced.

It should be understood that the specific examples in the embodiments of this application are merely used to help a person skilled in the art to better understand the embodiments of this application, but are not used to limit the scope of the embodiments of this application.

It should be understood that sequence numbers of the foregoing processes in various embodiments of this application do not mean execution sequences. The execution sequences of the processes should be determined based on functions and internal logic of the processes, and should not be construed as any limitation on the implementation processes of the embodiments of this application.

The foregoing describes in detail the data transmission method in the embodiments of this application, and the following describes a data transmission apparatus in the embodiments of this application.

FIG. 7 is a schematic block diagram of a data transmission apparatus 700 according to an embodiment of this application.

It should be understood that the data transmission apparatus 700 may correspond to the terminal device in the method embodiment, and may have any function of the terminal device in the method. The apparatus 700 includes a transceiver module 710 and a processing module 720.

The transceiver module 710 is configured to receive first configuration information, where the first configuration information is used to indicate a first transport block size TBS.

The processing module 720 is configured to determine a preset TBS set based on the first TBS, where the preset TBS set includes one or more TBSs, and the first TBS is a largest TBS in the TBS set.

The processing module 720 is further configured to determine, in the preset TBS set, a second TBS for transmitting first data.

The transceiver module 710 is further configured to send the first data based on the second TBS.

Optionally, the transceiver module is further configured to receive first control information, where the first control information includes information about a first quantity of repetitions, and the information about the first quantity of repetitions indicates the first quantity of repetitions;

the processing module 720 is further configured to determine a first parameter based on the first TBS and/or the second TBS;

the processing module 720 is further configured to determine a second quantity of repetitions based on the first quantity of repetitions and the first parameter; and

the transceiver module 710 is further configured to send the first data based on the second quantity of repetitions.

Optionally, the preset TBS set is {T1, T2, T3, T4}, T4 is the first TBS, and T1<T2<T3<T4; and

when T4 is greater than or equal to M, and the second TBS is equal to T4 or T3, the first parameter is equal to 1, where M is a positive integer specified in advance; and/or

when T4 is greater than or equal to M, and the second TBS is equal to T2 or T1, the first parameter is equal to 1/2; and/or

when T4 is less than M, the first parameter is equal to 1.

Optionally, if the terminal device is at a coverage enhancement level 0, at a coverage enhancement level 1, or in a coverage enhancement mode A, and the first TBS is less than or equal to N1, the first parameter is equal to 1, where N1 is a positive integer specified in advance; or

if the terminal device is at a coverage enhancement level 2, at a coverage enhancement level 3, or in a coverage enhancement mode B, and the first TBS is less than or equal to N2, the first parameter is equal to 1, where N2 is a positive integer specified in advance.

Optionally, the preset TBS set is {T1, T2, T3, T4}, T4 is the first TBS, T1<T2<T3<T4, T4 is greater than or equal to K, and K is a positive integer specified in advance; and

when the second TBS is equal to T4, T3, or T2, the first parameter is equal to 1; and/or

when the second TBS is equal to T1, the first parameter is equal to 1/2.

Optionally, the first control information further includes first indication information, the first indication information indicates whether the terminal device transmits the first data based on the first quantity of repetitions or transmits the first data based on the second quantity of repetitions.

Optionally, the first control information further includes second indication information, the second indication information indicates a second parameter, and the processing module is further configured to determine a third quantity of repetitions based on the second parameter and the first quantity of repetitions; or

the processing module 720 is further configured to determine a third quantity of repetitions based on the second parameter and the second quantity of repetitions; and

the processing module 720 is further configured to transmit the first data based on the third quantity of repetitions.

Optionally, the processing module 720 is specifically configured to:

determine a product of the second parameter and the first quantity of repetitions as the third quantity of repetitions; or
the processing module 720 is specifically configured to:
determine a product of the second parameter and the second quantity of repetitions as the third quantity of repetitions.

Therefore, according to the data transmission apparatus in this embodiment of this application, the terminal device may determine the preset TBS set based on the first TBS configured by the network device, determine, in the preset TBS set, the second TBS for transmitting the first data, and send the first data based on the second TBS. In other words, the terminal device can select a proper TBS based on a data volume, and therefore, a data transmission delay is reduced.

Optionally, the data transmission apparatus 700 in this embodiment of this application may be a terminal device, or may be a chip in a terminal device.

It should be understood that the data transmission apparatus 700 in this embodiment of this application may correspond to the terminal device in the data transmission method in the embodiment of FIG. 6, and the foregoing management operations and/or functions and other management operations and/or functions of modules of the data transmission apparatus 700 are intended to separately implement corresponding steps of the foregoing method. For brevity, details are not described herein again.

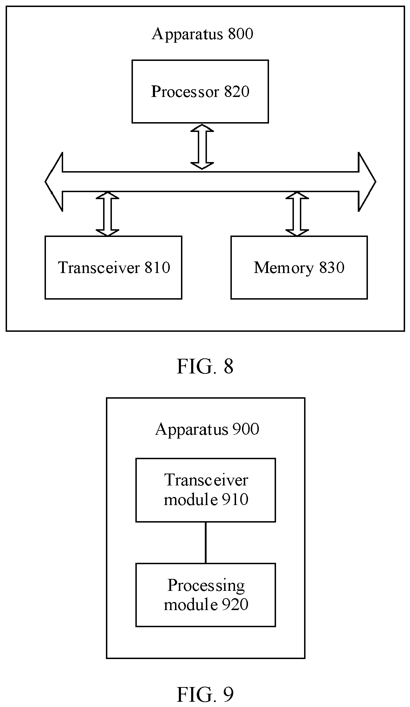

Optionally, if the data transmission apparatus 700 is a terminal device, in this embodiment of this application, the transceiver module 710 may be implemented by a transceiver 810, and the processing module 720 may be implemented by a processor 820. As shown in FIG. 8, a data transmission apparatus 800 may include the transceiver 810, the processor 820, and a memory 830. The memory 830 may be configured to store indication information, and may be further configured to store code, an instruction, and the like that are executed by the processor 820. The transceiver 810 may include a radio frequency circuit. Optionally, the terminal device further includes a storage unit.

The storage unit may be, for example, the memory. When the terminal device includes the storage unit, the storage unit is configured to store a computer-executable instruction. The processing unit is connected to the storage unit. The processing unit executes the computer-executable instruction stored in the storage unit, so that the terminal device performs the data transmission method.

Optionally, if the data transmission apparatus 700 is a chip in a terminal device, the chip includes the processing module 710 and the transceiver module 720. The transceiver module 720 may be implemented by the transceiver 810, and the processing module 710 may be implemented by the processor 820. The transceiver module may be, for example, an input/output interface, a pin, or a circuit. The processing module may execute a computer-executable instruction stored in a storage unit. The storage unit is a storage unit in the chip, for example, a register or a cache, or the storage unit may be a storage unit in the terminal but outside the chip, for example, a read-only memory (read-only memory, ROM) or another type of static storage device capable of storing static information and instructions, or a random access memory (random access memory, RAM).

FIG. 9 shows a data transmission apparatus 900 according to an embodiment of this application. The data transmission apparatus 900 may be the foregoing network device.

It should be understood that the data transmission apparatus 900 may correspond to the network device in the method embodiment, and may have any function of the network device in the method. The apparatus 900 includes a transceiver module 910 and a processing module 920.

The transceiver module 910 is configured to send first configuration information, where the first configuration information is used to indicate a first transport block size TBS.

The processing module 920 is configured to determine a preset TBS set based on the first TBS, where the preset TBS set includes one or more TBSs, and the first TBS is a largest TBS in the TBS set.

The transceiver module 910 is further configured to receive first data based on the one or more TBSs.

Optionally, the transceiver module 910 is further configured to send first control information, where the first control information includes information about a first quantity of repetitions, and the information about the first quantity of repetitions indicates the first quantity of repetitions;

the processing module 920 is further configured to determine one or more first parameters based on the first TBS and/or the TBS in the preset TBS set;

the processing module 920 is further configured to determine one or more second quantities of repetitions based on the first quantity of repetitions and the one or more first parameters; and

the transceiver module 910 is further configured to receive the first data based on the one or more second quantities of repetitions.

Optionally, the preset TBS set is {T1, T2, T3, T4}, T4 is the first TBS, and T1<T2<T3<T4; and

when T4 is greater than or equal to M, and a second TBS is equal to T4 or T3, the first parameter is equal to 1, where M is a positive integer specified in advance; and/or

when T4 is greater than or equal to M, and a second TBS is equal to T2 or T1, the first parameter is equal to 1/2; and/or

when T4 is less than M, the first parameter is equal to 1.

Optionally, if a terminal device is at a coverage enhancement level 0, at a coverage enhancement level 1, or in a coverage enhancement mode A, and the first TBS is less than or equal to N1, the first parameter is equal to 1, where N1 is a positive integer specified in advance; or

if a terminal device is at a coverage enhancement level 2, at a coverage enhancement level 3, or in a coverage enhancement mode B, and the first TBS is less than or equal to N2, the first parameter is equal to 1, where N2 is a positive integer specified in advance.

Optionally, the preset TBS set is {T1, T2, T3, T4}, T4 is the first TBS, T1<T2<T3<T4, T4 is greater than or equal to K, and K is a positive integer specified in advance; and

when a second TBS is equal to T4, T3, or T2, the first parameter is equal to 1; and/or

when a second TBS is equal to T1, the first parameter is equal to 1/2.

Optionally, the first control information further includes first indication information, the first indication information indicates whether the terminal device transmits the first data based on the first quantity of repetitions or transmits the first data by using the second quantity of repetitions.

Optionally, the first control information further includes second indication information, the second indication information indicates a second parameter, the second parameter is used by the terminal device to determine a third quantity of repetitions, and the third quantity of repetitions is used for transmitting the first data.

Therefore, according to the data transmission apparatus in this embodiment of this application, the terminal device may determine the preset TBS set based on the first TBS configured by the network device, determine, in the preset TBS set, the second TBS for transmitting the first data, and send the first data based on the second TBS. In other words, the terminal device can select a proper TBS based on a data volume, and therefore, a data transmission delay is reduced.

Optionally, the data transmission apparatus 900 in this embodiment of this application may be a network device, or may be a chip in a network device.

It should be understood that, the data transmission apparatus 900 in this embodiment of this application may correspond to the network device in the data transmission method in the embodiment of FIG. 6, and the foregoing management operations and/or functions and other management operations and/or functions of modules of the data transmission apparatus 900 are intended to separately implement corresponding steps of the foregoing method. For brevity, details are not described herein again.

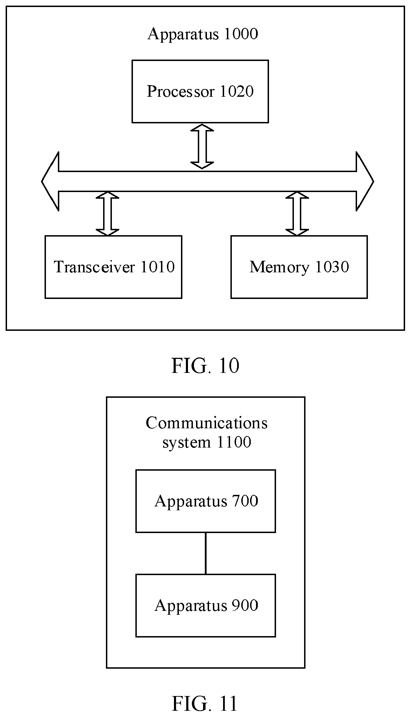

Optionally, if the data transmission apparatus 900 is a network device, in this embodiment of this application, the transceiver module 910 may be implemented by a transceiver 1010, and the processing module 920 may be implemented by a processor 1020. As shown in FIG. 10, an apparatus 1080 may include the transceiver 1010, the processor 1020, and a memory 1030. The memory 1030 may be configured to store indication information, and may be further configured to store code, an instruction, and the like that are executed by the processor 1020. The transceiver may include a radio frequency circuit. Optionally, the network device further includes a storage unit.

The storage unit may be, for example, the memory. When the network device includes the storage unit, the storage unit is configured to store a computer-executable instruction. The processing module is connected to the storage unit. The processing module executes the computer-executable instruction stored in the storage unit, so that the network device performs the data transmission method.

Optionally, if the data transmission apparatus 900 is a chip in a network device, the chip includes the processing module 920 and the transceiver module 910. The transceiver module 910 may be, for example, an input/output interface, a pin, or a circuit on the chip. The processing module 920 may execute a computer-executable instruction stored in a storage unit.

Optionally, the storage unit is a storage unit in the chip, for example, a register or a cache, or the storage unit may be a storage unit in the terminal but outside the chip, for example, a read-only memory (read-only memory, ROM) or another type of static storage device capable of storing static information and instructions, or a random access memory (random access memory, RAM). The storage unit is a storage unit in the chip, for example, a register or a cache, or the storage unit may be a storage unit in the terminal but outside the chip, for example, a read-only memory (read-only memory, ROM), another type of static storage device capable of storing static information and instructions, or a random access memory (random access memory, RAM).

It should be understood that, the processor 820 or the processor 1020 may be an integrated circuit chip, and has a signal processing capability. In an implementation process, the steps in the foregoing method embodiment may be completed by using a hardware integrated logic circuit in the processor or an instruction in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The methods, steps, and logical block diagrams that are disclosed in the embodiments of this application may be implemented or performed. The general-purpose processor may be a microprocessor, or the processor may be any conventional processor or the like. Steps of the method disclosed with reference to the embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in a memory, and the processor reads information in the memory and completes the steps in the foregoing method in combination with hardware of the processor.

It may be understood that, in the embodiments of this application, the memory 830 or the memory 1030 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. According to a description that is used as an example instead of a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM). It should be noted that the memory in the system and the method described in this specification aims to include but is not limited to these memories and any memory of another proper type.

FIG. 11 shows a communications system 1100 according to an embodiment of this application. The communications system 1100 includes:

the data transmission apparatus 700 in the embodiment of FIG. 7 and the data transmission apparatus 900 in the embodiment of FIG. 9.

An embodiment of this application further provides a computer storage medium, and the computer storage medium may store a program instruction for executing any of the foregoing methods.

Optionally, the storage medium may be specifically the memory 830 or the memory 1030.

An embodiment of this application further provides a chip system. The chip system includes a processor, configured to support a distributed unit, a central unit, a terminal device, and a network device in implementing a function in the foregoing embodiment, for example, generating or processing data and/or information in the foregoing method.

In a possible design, the chip system further includes a memory, and the memory is configured to store a program instruction and data that are necessary for the distributed unit, the central unit, the terminal device, and the network device. The chip system may include a chip, or may include a chip and another discrete component.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the method described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

   receiving first configuration information, wherein the first configuration information is used to indicate a first transport block size TBS;
   determining a preset TBS set based on the first TBS, wherein the preset TBS set comprises one or more TBSs, and the first TBS is a largest TBS in the TBS set;
   determining, in the preset TBS set, a second TBS for transmitting first data; and
   sending the first data based on the second TBS.

2. The method according to claim 1, wherein the method further comprises:

   receiving first control information, wherein the first control information comprises information about a first quantity of repetitions, and the information about the first quantity of repetitions indicates the first quantity of repetitions;
   determining a first parameter based on the first TBS and/or the second TBS;
   determining a second quantity of repetitions based on the first quantity of repetitions and the first parameter; and
   sending the first data based on the second quantity of repetitions.

3. The method according to claim 2, wherein the preset TBS set is {T1, T2, T3, T4}, T4 is the first TBS, and T1<T2<T3<T4; and
   when T4 is greater than or equal to M, and the second TBS is equal to T4 or T3, the first parameter is equal to 1, wherein M is a positive integer specified in advance; and/or
   when T4 is greater than or equal to M, and the second TBS is equal to T2 or T1, the first parameter is equal to 1/2; and/or
   when T4 is less than M, the first parameter is equal to 1.

4. The method according to claim 2, wherein
   if a terminal device is at a coverage enhancement level 0, at a coverage enhancement level 1, or in a coverage enhancement mode A, and the first TBS is less than or equal to N1, the first parameter is equal to 1, wherein N1 is a positive integer specified in advance; or
   if a terminal device is at a coverage enhancement level 2, at a coverage enhancement level 3, or in a coverage enhancement mode B, and the first TBS is less than or equal to N2, the first parameter is equal to 1, wherein N2 is a positive integer specified in advance.

5. The method according to claim 2, wherein the preset TBS set is {T1, T2, T3, T4}, T4 is the first TBS, T1<T2<T3<T4, T4 is greater than or equal to K, and K is a positive integer specified in advance; and
   when the second TBS is equal to T4, T3, or T2, the first parameter is equal to 1; and/or
   when the second TBS is equal to T1, the first parameter is equal to 1/2.

6. The method according to any one of claims 1 to 5, wherein the first control information further comprises first indication information, and the first indication information indicates whether the terminal device transmits the first data based on the first quantity of repetitions or transmits the first data by using the second quantity of repetitions.

7. The method according to any one of claims 2 to 5, wherein the first control information further comprises second indication information, the second indication information indicates a second parameter, and the method further comprises:

   determining a third quantity of repetitions based on the second parameter and the first quantity of repetitions; or
   determining a third quantity of repetitions based on the second parameter and the second quantity of repetitions; and
   transmitting the first data based on the third quantity of repetitions.

8. The method according to claim 7, wherein the determining a third quantity of repetitions based on the second parameter and the first quantity of repetitions comprises:

   determining a product of the second parameter and the first quantity of repetitions as the third quantity of repetitions; or
   the determining a third quantity of repetitions based on the second parameter and the second quantity of repetitions comprises:
determining a product of the second parameter and the second quantity of repetitions as the third quantity of repetitions.

9. A data transmission method, comprising:

sending first configuration information, wherein the first configuration information is used to indicate a first transport block size TBS;
determining a preset TBS set based on the first TBS, wherein the preset TBS set comprises one or more TBSs, and the first TBS is a largest TBS in the TBS set; and
receiving first data based on the one or more TBSs.

10. The method according to claim 9, wherein the method further comprises:

sending first control information, wherein the first control information comprises information about a first quantity of repetitions, and the information about the first quantity of repetitions indicates the first quantity of repetitions;
determining one or more first parameters based on the first TBS and/or the TBS in the preset TBS set;
determining one or more second quantities of repetitions based on the first quantity of repetitions and the one or more first parameters; and
receiving the first data based on the one or more second quantities of repetitions.

11. The method according to claim 10, wherein the preset TBS set is {T1, T2, T3, T4}, T4 is the first TBS, and T1<T2<T3<T4; and
when T4 is greater than or equal to M, and the second TBS is equal to T4 or T3, the first parameter is equal to 1, wherein M is a positive integer specified in advance; and/or
when T4 is greater than or equal to M, and the second TBS is equal to T2 or T1, the first parameter is equal to 1/2; and/or
when T4 is less than M, the first parameter is equal to 1.

12. The method according to claim 10, wherein
if a terminal device is at a coverage enhancement level 0, at a coverage enhancement level 1, or in a coverage enhancement mode A, and the first TBS is less than or equal to N1, the first parameter is equal to 1, wherein N1 is a positive integer specified in advance; or
if a terminal device is at a coverage enhancement level 2, at a coverage enhancement level 3, or in a coverage enhancement mode B, and the first TBS is less than or equal to N2, the first parameter is equal to 1, wherein N2 is a positive integer specified in advance.

13. The method according to claim 10, wherein the preset TBS set is {T1, T2, T3, T4}, T4 is the first TBS, T1<T2<T3<T4, T4 is greater than or equal to K, and K is a positive integer specified in advance; and
when the second TBS is equal to T4, T3, or T2, the first parameter is equal to 1; and/or
when the second TBS is equal to T1, the first parameter is equal to 1/2.

14. The method according to any one of claims 9 to 13, wherein the first control information further comprises first indication information, and the first indication information indicates whether the terminal device transmits the first databased on the first quantity of repetitions or transmits the first data by using the second quantity of repetitions.

15. The method according to any one of claims 10 to 13, wherein the first control information further comprises second indication information, the second indication information indicates a second parameter, the second parameter is used by the terminal device to determine a third quantity of repetitions, and the third quantity of repetitions is used for transmitting the first data.

16. A data transmission apparatus, comprising:

a transceiver module, configured to receive first configuration information, wherein the first configuration information is used to indicate a first transport block size TBS; and
a processing module, configured to determine a preset TBS set based on the first TBS, wherein the preset TBS set comprises one or more TBSs, and the first TBS is a largest TBS in the TBS set, wherein
the processing module is further configured to determine, in the preset TBS set, a second TBS for transmitting first data; and

the transceiver module is further configured to send the first data based on the second TBS.

17. The apparatus according to claim 16, wherein the transceiver module is further configured to receive first control information, wherein the first control information comprises information about a first quantity of repetitions, and the information about the first quantity of repetitions indicates the first quantity of repetitions;
the processing module is further configured to determine a first parameter based on the first TBS and/or the second TBS;
the processing module is further configured to determine a second quantity of repetitions based on the first quantity of repetitions and the first parameter; and
the transceiver module is further configured to send the first data based on the second quantity of repetitions.

18. The apparatus according to claim 17, wherein the preset TBS set is {T1, T2, T3, T4}, T4 is the first TBS, and T1<T2<T3<T4; and
when T4 is greater than or equal to M, and the second TBS is equal to T4 or T3, the first parameter is equal to 1, wherein M is a positive integer specified in advance; and/or
when T4 is greater than or equal to M, and the second TBS is equal to T2 or T1, the first parameter is equal to 1/2; and/or
when T4 is less than M, the first parameter is equal to 1.

19. The apparatus according to claim 17, wherein
if a terminal device is at a coverage enhancement level 0, at a coverage enhancement level 1, or in a coverage enhancement mode A, and the first TBS is less than or equal to N1, the first parameter is equal to 1, wherein N1 is a positive integer specified in advance; or
if a terminal device is at a coverage enhancement level 2, at a coverage enhancement level 3, or in a coverage enhancement mode B, and the first TBS is less than or equal to N2, the first parameter is equal to 1, wherein N2 is a positive integer specified in advance.

20. The apparatus according to claim 17, wherein the preset TBS set is {T1, T2, T3, T4}, T4 is the first TBS, T1<T2<T3<T4, T4 is greater than or equal to K, and K is a positive integer specified in advance; and
when the second TBS is equal to T4, T3, or T2, the first parameter is equal to 1; and/or
when the second TBS is equal to T1, the first parameter is equal to 1/2.

21. The apparatus according to any one of claims 16 to 20, wherein the first control information further comprises first indication information, and the first indication information indicates whether the terminal device transmits the first data based on the first quantity of repetitions or transmits the first data by using the second quantity of repetitions.

22. The apparatus according to any one of claims 17 to 20, wherein the first control information further comprises second indication information, the second indication information indicates a second parameter, and the processing module is further configured to determine a third quantity of repetitions based on the second parameter and the first quantity of repetitions; or
the processing module is further configured to determine a third quantity of repetitions based on the second parameter and the second quantity of repetitions; and
the processing module is further configured to transmit the first data based on the third quantity of repetitions.

23. The apparatus according to claim 22, wherein the processing module is specifically configured to:

   determine a product of the second parameter and the first quantity of repetitions as the third quantity of repetitions; or
   the processing module is specifically configured to:
   determine a product of the second parameter and the second quantity of repetitions as the third quantity of repetitions.

24. A data transmission apparatus, comprising:

   a transceiver module, configured to send first configuration information, wherein the first configuration information is used to indicate a first transport block size TBS; and
   a processing module, configured to determine a preset TBS set based on the first TBS, wherein the preset TBS set comprises one or more TBSs, and the first TBS is a largest TBS in the TBS set, wherein
   the transceiver module is further configured to receive first data based on the one or more TBSs.

25. The apparatus according to claim 24, wherein the transceiver module is further configured to send first control information, wherein the first control information comprises information about a first quantity of repetitions, and the information about the first quantity of repetitions indicates the first quantity of repetitions;

the processing module is further configured to determine one or more first parameters based on the first TBS and/or the TBS in the preset TBS set;

the processing module is further configured to determine one or more second quantities of repetitions based on the first quantity of repetitions and the one or more first parameters; and

the transceiver module is further configured to receive the first data based on the one or more second quantities of repetitions.

26. The apparatus according to claim 25, wherein the preset TBS set is {T1, T2, T3, T4}, T4 is the first TBS, and T1<T2<T3<T4; and

when T4 is greater than or equal to M, and the second TBS is equal to T4 or T3, the first parameter is equal to 1, wherein M is a positive integer specified in advance; and/or

when T4 is greater than or equal to M, and the second TBS is equal to T2 or T1, the first parameter is equal to 1/2; and/or when T4 is less than M, the first parameter is equal to 1.

27. The apparatus according to claim 25, wherein

if a terminal device is at a coverage enhancement level 0, at a coverage enhancement level 1, or in a coverage enhancement mode A, and the first TBS is less than or equal to N1, the first parameter is equal to 1, wherein N1 is a positive integer specified in advance; or

if a terminal device is at a coverage enhancement level 2, at a coverage enhancement level 3, or in a coverage enhancement mode B, and the first TBS is less than or equal to N2, the first parameter is equal to 1, wherein N2 is a positive integer specified in advance.

28. The apparatus according to claim 25, wherein the preset TBS set is {T1, T2, T3, T4}, T4 is the first TBS, T1<T2<T3<T4, T4 is greater than or equal to K, and K is a positive integer specified in advance; and

when the second TBS is equal to T4, T3, or T2, the first parameter is equal to 1;

and/or when the second TBS is equal to T1, the first parameter is equal to 1/2.

29. The apparatus according to any one of claims 24 to 28, wherein the first control information further comprises first indication information, and the first indication information indicates whether the terminal device transmits the first data based on the first quantity of repetitions or transmits the first data by using the second quantity of repetitions.

30. The apparatus according to any one of claims 25 to 28, wherein the first control information further comprises second indication information, the second indication information indicates a second parameter, the second parameter is used by the terminal device to determine a third quantity of repetitions, and the third quantity of repetitions is used for transmitting the first data.

FIG. 1

Terminal device

Network device

201: Configuration information used to configure a PRACH resource

202: Send an EDT capability of the terminal device on the PRACH resource

203: Determine an uplink transmission resource of data based on the EDT capability

204: Send configuration information used to indicate the uplink transmission resource

205: Send target data on the uplink transmission resource

FIG. 2

| E/T/R/R/BI subheader | E/T/RAPID subheader 1 | E/T/RAPID subheader 2 | ... | E/T/RAPID subheader n |

| MAC header | MAC RAR 1 | MAC RAR 2 | ... | MAC RAR n | Padding |

◄——— MAC payload ———►

FIG. 3

| | | |
|---|---|---|
| R | Timing advance | Oct 1 |
| Timing advance | Uplink grant | Oct 2 |
| Uplink grant | | Oct 3 |
| Uplink grant | | Oct 4 |
| Temporary C-RNTI | | Oct 5 |
| Temporary C-RNTI | | Oct 6 |

FIG. 4

| | | |
|---|---|---|
| R | Timing advance | Oct 1 |
| Timing advance | Uplink grant | Oct 2 |
| Uplink grant | | Oct 3 |
| Temporary C-RNTI | | Oct 4 |
| Temporary C-RNTI | | Oct 5 |

FIG. 5

601: First configuration information, where the first configuration information is used to indicate a first transport block size TBS

602: Determine a preset TBS set based on the first TBS, where the preset TBS set includes one or more TBSs, and the first TBS is a largest TBS in the TBS set

603: Determine, in the preset TBS set, a second TBS for transmitting first data

604: Send the first data based on the second TBS

FIG. 6

Apparatus 700

Transceiver module 710

Processing module 720

FIG. 7

Apparatus 800

Processor 820

Transceiver 810

Memory 830

FIG. 8

Apparatus 900

Transceiver module 910

Processing module 920

FIG. 9

Apparatus 1000

Processor 1020

Transceiver 1010

Memory 1030

FIG. 10

Communications system 1100

Apparatus 700

Apparatus 900

FIG. 11

## INTERNATIONAL SEARCH REPORT

| International application No. |
|---|
| **PCT/CN2018/086622** |

| A. | CLASSIFICATION OF SUBJECT MATTER |
|---|---|
| | H04W 24/10(2009.01)i |

According to International Patent Classification (IPC) or to both national classification and IPC

| B. | FIELDS SEARCHED |
|---|---|

Minimum documentation searched (classification system followed by classification symbols)

H04W;H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 传输块, 大小, 尺寸, 最大, 集, 组, 合适, 适合, 适当, 恰当, TBS, transport block size, set, group, appropriate, adaptive, suited, proper

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 101841843 A (NEW POSTCOM EQUIPMENT CO., LTD.) 22 September 2010 (2010-09-22) description, paragraphs 0066-0139 | 1-30 |
| X | CN 101222271 A (ZTE CORPORATION) 16 July 2008 (2008-07-16) description page 9, paragraph 1 to page 13, paragraph 3 | 1-30 |
| A | US 2017181123 A1 (TELEFONAKTIEBOLAGET L M ERICSSONPUBL) 22 June 2017 (2017-06-22) entire document | 1-30 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 January 2019** | **30 January 2019** |

| Name and mailing address of the ISA/CN | Authorized officer |
|---|---|
| **State Intellectual Property Office of the P. R. China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/086622**

| Patent document cited in search report | | | Publication date (day/month/year) | Patent family member(s) | | | Publication date (day/month/year) |
|---|---|---|---|---|---|---|---|
| CN | 101841843 | A | 22 September 2010 | None | | | |
| CN | 101222271 | A | 16 July 2008 | None | | | |
| US | 2017181123 | A1 | 22 June 2017 | WO | 2015115981 | A1 | 06 August 2015 |
| | | | | EP | 3100544 | A1 | 07 December 2016 |

Form PCT/ISA/210 (patent family annex) (January 2015)